# EUROPEAN PATENT APPLICATION

(11) **EP 1 158 211 A2**
(43) Date of publication of application: **28.11.2001**
(21) Application number: 01112416.1
(22) Date of filing: 21.05.2001
(51) Int. Cl.: F16H 55/56

(54) **Belt-type continuously variable transmission**

(30) Priority: 22.05.2000 JP 2000150403
(71) Applicant: TOYOTA JIDOSHA KABUSHIKI KAISHA, Aichi-ken 471-8571 (JP)
(72) Inventor: Tanigawa, Yukihiro, c/oToyota Jidosha K.K., Toyota-shi, Aichi-ken, 471-8571 (JP); Honda, Atsushi, c/oToyota Jidosha K.K., Toyota-shi, Aichi-ken, 471-8571 (JP)
(74) Representative: Leson, Thomas Johannes Alois, Dipl.-Ing.

(57) **Abstract**

In a belt-type continuously variable transmission having a primary pulley (36) provided on a primary shaft (30), a belt wound and hung around the primary pulley (36), a carrier fitted to the primary pulley (36) in a power transmissible manner, and a bearing supporting the primary pulley (36), a gap allowing the primary shaft (30) and the carrier to intersect with each other is provided between outer and inner teeth for fitting the primary shaft (30) and the carrier to each other.

## Description

### BACKGROUND OF THE INVENTION

### FIELD OF THE INVENTION

The invention relates to a wound-and-hung transmission device and a belt-type continuously variable transmission having a construction wherein a wound-and-hung transmission member transmits power between two rotating members.

### DESCRIPTION OF THE BACKGROUND

In general, a transmission is provided on the output side of an engine for the purpose of operating the engine on an optimal condition corresponding to a running state of a vehicle. This transmission may be either a continuously variable transmission capable of controlling the gear change ratio non-stepwise (continuously) or a stepped transmission capable of controlling the gear change ratio stepwise (discontinuously). One example of such a continuously variable transmission is a belt-type continuously variable transmission. This belt-type continuously variable transmission has two rotating members disposed parallel to each other, and primary and secondary pulleys fitted to the rotating members respectively. The primary and secondary pulleys are both constructed by combining a stationary sheave with a movable sheave. A V-shaped groove is formed between the stationary sheave and the movable sheave.

A belt is wound and hung around a groove in the primary pulley and a groove in the secondary pulley. Hydraulic chambers for applying an axial pressing force to a belt supporting member of the primary pulley and a belt supporting member of the secondary pulley are provided separately. If hydraulic pressures in the hydraulic chambers are controlled separately, the width of the groove in the primary pulley is controlled so that the wound and hung belt changes its diameter in the groove, so that the gear ratio is changed, and the width of the groove in the secondary pulley changes so that the tensile force applied to the belt is controlled.

One example of such a belt-type continuously variable transmission is disclosed in Japanese Patent Application Laid-Open No. HEI 11-72151. The belt-type continuously variable transmission disclosed in this publication has a stationary sheave (power transmission member) and a movable sheave (power transmission member) provided in a pulley shaft (rotating member), a hydraulic servo mechanism that moves the movable sheave axially, and a drive belt (wound-and-hung transmission member or belt) that is wound and hung around a groove formed between the stationary sheave and the movable sheave. A transmission gear (connecting member) is spline-fitted to the pulley shaft.

In the belt-type continuously variable transmission constructed as described above, the movable sheave moves axially in accordance with a hydraulic pressure control state in a hydraulic chamber of the hydraulic servo mechanism, so that the width of the groove is controlled, and the position of the wound and hung drive belt in the groove increases or decreases in diameter. Power is transmitted between the pulley shaft and the transmission gear.

In the belt-type continuously variable transmission disclosed in the above-described publication, since a predetermined tensile force is applied to the drive belt, the pulley shaft deflects at a supporting portion such as a bearing serving as a fulcrum. As a result, the axis of the transmission gear connected to the pulley shaft inclines, and various inconveniences may be caused. For example, a state of contact of teeth between the inclining transmission gear and a gear engaged therewith changes, and gear noise, abnormal abrasion, power loss and so on may be caused.

### SUMMARY OF THE INVENTION

It is an object of the invention to provide a wound-and-hung transmission device and a belt-type continuously variable transmission which are capable of restraining any inclination of an axis of a connecting member even if a rotating member has deflected.

A transmission device according to a first aspect of the invention comprises a power transmission member provided in a rotating member, a wound-and-hung transmission member wound and hung around the power transmission member, a connecting member connected to the rotating member in a power transmissible manner, a supporting member supporting the rotating member, and an intersection allowing mechanism that allows an axis of the rotating member and an axis of the connecting member to intersect with each other in a connecting region between the rotating member and the connecting member.

According to the above-described first aspect, even if the rotating member is deflected with the supporting member serving as a fulcrum, the axis of the rotating member and the axis of the connecting member can intersect with each other due to a tensile force of the wound-and-hung transmission member. Therefore, inclination of the axis of the connecting member is restrained.

A wound-and-hung transmission device according to a second aspect of the invention comprises a power transmission member provided in a rotating member, a wound-and-hung transmission member wound and hung around the power transmission member, a connecting member connected to the rotating member in a power transmissible manner, a supporting member supporting the rotating member, and a movement allowing mechanism that allows an axis of the rotating member and an axis of the connecting member to move relatively to each other in a direction perpendicular to the axes in a connecting region between the rotating member and the connecting member.

According to the above-described second aspect, even if the rotating member has deflected with the supporting member serving as a fulcrum, the axis of the rotating member and the axis of the connecting member can intersect with each other due to a tensile force of the wound-and-hung transmission member. Therefore, inclination of the axis of the connecting member is restrained.

In the above-described first and second aspects, a pulley or a sprocket can be employed as the power transmission member. A belt or a chain can instead be employed as the wound-and-hung transmission member.

A belt-type continuously variable transmission according to a third aspect of the invention comprises a power transmission member provided as a rotating member, a belt wound and hung around the power transmission member, a connecting member connected to the rotating member in a power transmissible manner, a supporting member supporting the rotating member, and an intersection allowing mechanism that allows an axis of the rotating member and an axis of the connecting member to intersect with each other in a connecting region between the rotating member and the connecting member.

According to the above-described third aspect, even if the rotating member has deflected with the supporting member serving as a fulcrum, the axis of the rotating member and the axis of the connecting member will intersect with each other due to a tensile force of the belt. Therefore, inclination of the axis of the connecting member is restrained.

In the above-described first to third aspects, as a construction of connecting the rotating member and the connecting member, it is possible to mention a method of fitting the connecting member into a hole (or recess) axially provided in the rotating member and a method of fitting the rotating member into a hole axially provided in the connecting member. That is, if the construction of fitting the connecting member into the hole axially provided in the rotating member is adopted, the intersection allowing mechanism or the movement allowing mechanism is provided between an inner peripheral face of the rotating member and an outer peripheral face of the connecting member. On the other hand, if the construction of fitting the rotating member into the hole axially provided in the connecting member is adopted, the intersection allowing mechanism or the movement allowing mechanism is provided between the outer peripheral face of the rotating member and the inner peripheral face of the connecting member.

In the above-described third aspect, the connecting region, the supporting member, and the intersection allowing mechanism may be disposed at the same position in the direction of the axis of the rotating member.

In this construction, since the connecting region, the supporting member, and the intersection allowing mechanism are disposed at the same position in the direction of the axis of the rotating member, the rotating member deflects in the direction of its axis with the region supported by the supporting member serving as a fulcrum. In a region that belongs to the rotating member and that is supported by the supporting member, displacement in the direction perpendicular to the axes is restrained. The intersection allowing mechanism that allows the rotating member and the connecting member to intersect with each other is provided in the region where displacement in the direction perpendicular to the axes is restrained. Therefore, even if the rotating member has deflected, this deflection is hardly conveyed to the side of the connecting member. Therefore, inclination of the axis of the connecting member is restrained.

In the above-described third aspect, the connecting member may be formed with a gear. In this case, the connecting member itself may be provided with the gear, or a component fitted to the connecting member may be provided with the gear.

In this construction, inclination of the gear is restrained. Therefore, changes in a state of engagement of the gear and another gear engaged therewith are restrained.

In the above-described third aspect, a frictional engagement device that is engaged and released to control a power transmission state may be connected to the connecting member.

In this construction, a state of contact of the frictional engagement device is maintained uniform along the entire circumference.

In addition to the above-described aspects, it is possible to adopt a construction wherein the rotating member includes a driving-side rotating member and a driven-side rotating member, wherein the power transmission member includes a driving-side pulley provided in the driving-side rotating member and a driven-side pulley provided in the driven-side rotating member, wherein power from a driving power source is inputted to the belt via the driving-side rotating member and is then transmitted to the driven-side rotating member, and wherein the intersection allowing mechanism is provided in at least one of the driving-side rotating member and the driven-side rotating member and the connecting region between the rotating member and the connecting member.

In this construction, if power from the driving power source is inputted to the driving-side rotating member, it is transmitted to the driven-side rotating member via the belt.

In addition to the above-described third aspect, a cylindrical reinforcing member may be provided between the supporting member and a case fitted with the supporting member, and the reinforcing member may be formed with a radially elongated flange.

In this construction, when the rotating member deflects, displacement of the rotating member and the supporting member is received by the reinforcing member. Therefore, a load resulting from inclination of the rotating member is inhibited from being transmitted to the side of the case. Because the reinforcing member is provided with the flange, an area where the reinforcing member is axially pressed to be fitted to the case is greatly enlarged.

In addition to the above-described aspects, the case and the reinforcing member may be formed from a metallic material, and the reinforcing member may be harder than the case.

In this construction, deformation of the case, which is not as hard as the reinforcing member, is restrained.

### BRIEF DESCRIPTION OF THE DRAWINGS

Fig. 1 is a front sectional view of a structure for supporting a primary shaft according to an embodiment of the invention.
Fig. 2 is a skeleton view of a power transmission path of an F/F vehicle to which the invention is applied.
Fig. 3 is a front sectional view of a structure for supporting a secondary shaft according to an embodiment of the invention.
Fig. 4 is a side view of arrangement of various shafts in a transaxle case shown in Fig. 2.
Fig. 5 is a side view of a relation between a counter driven gear and a differential case shown in Fig. 2.
Fig. 6 is a block diagram of a control system of a vehicle shown in Fig. 2.

### DETAILED DESCRIPTION OF PREFERRED EMBODIMENT

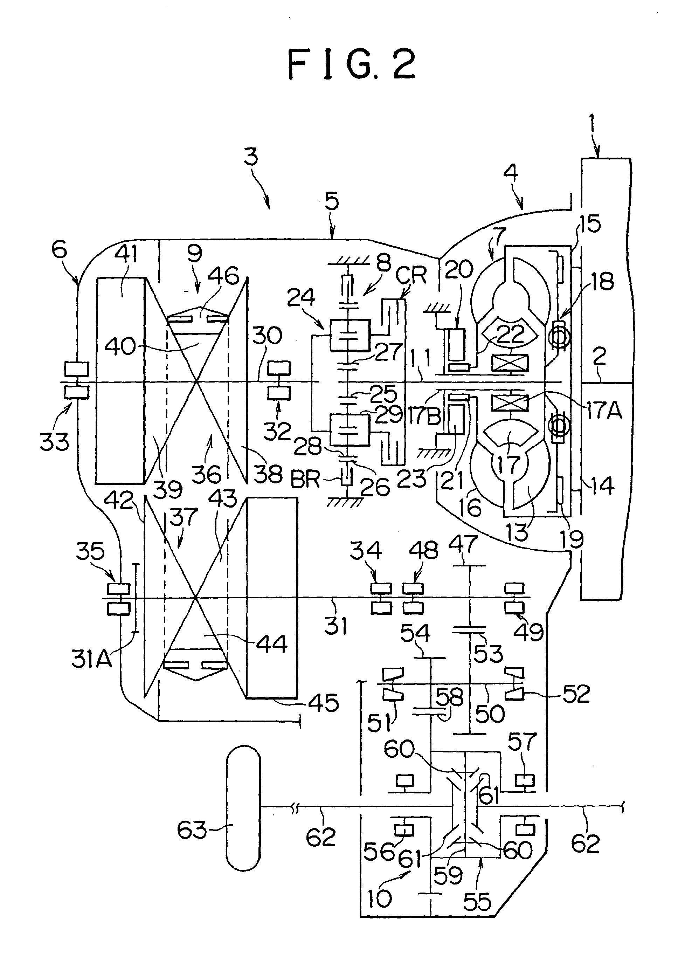

Next, the invention will be described concretely with reference to the drawings. Fig. 2 is a skeleton view of an F/F vehicle (front-engine front-drive/front-mounted-engine front-wheel-drive vehicle) to which the invention is applied. In Fig. 2, an engine 1 is a driving power source of a vehicle. As the engine 1, an internal combustion engine may be employed. More specifically, a gasoline engine, a diesel engine, an LPG engine, or the like is employed. A crank shaft 2 of the engine 1 is disposed widthwise with respect to the vehicle. For reason of convenience, the following description will assume a case where a gasoline engine is employed as the engine 1.

A transaxle 3 is provided on the output side of the engine 1. The transaxle 3 has a transaxle housing 4 fitted to a rear end side of the engine 1, a transaxle case 5 fitted to an opening end that belongs to the transaxle housing 4 and that is opposite the engine 1, and a transaxle rear cover 6 fitted to an opening end that belongs to the transaxle case 5 and that is opposite the transaxle housing 4.

A torque converter 7 is provided inside the transaxle housing 4. A forward/reverse switching mechanism 8, a belt-type continuously variable transmission (CVT) 9, and a final reduction gear (i.e., a differential gear) 10 are provided inside the transaxle case 5 and the transaxle rear cover 6.

First of all, the construction of the torque converter 7 will be described. An input shaft 11 that can rotate around the same axis as that of the crank shaft 2 is provided inside the transaxle housing 4. A turbine runner 13 is fitted to an end of input shaft 11 that is on the side of the engine 1.

On the other hand, a front cover 15 is connected to a rear end of the crank shaft 2 via a drive plate 14, and a pump impeller 16 is connected to the front cover 15. The turbine runner 13 and the pump impeller 16 are arranged facing each other. A stator 17 is provided inside the turbine runner 13 and the pump impeller 16. A hollow shaft 17B is connected to the stator 17 via a one-way clutch 17A. The input shaft 11 is provided inside the hollow shaft 17B. A lock-up clutch 19 is provided via a damper mechanism 18 at an end of the input shaft 11 that is on the side of the front cover 15. Oil as a working fluid is supplied to a casing (not shown) constituted by the thus-constructed front cover 15, the pump impeller 16 and so on.

Because of the above-described construction, power (torque) of the engine 1 is transmitted from the crank shaft 2 to the front cover 15. If the lock-up clutch 19 is released at this moment, torque of the pump impeller 16 is transmitted to the turbine runner 13 by fluid and then to the input shaft 11. The torque that is transmitted from the pump impeller 16 to the turbine runner 13 can also be amplified by the stator 17. On the other hand, if the lock-up clutch 19 is engaged, torque of the front cover 15 is mechanically transmitted to the input shaft 11.

An oil pump 20 is provided between the torque converter 7 and the forward/reverse switching mechanism 8. A rotor 21 of the oil pump 20 and the pump impeller 16 are connected by a cylindrical hub 22. A body 23 of the oil pump 20 is fixed to the side of the transaxle case 5. The hollow shaft 17B is fixed to the side of the body 23. Because of the above-described construction, power of the engine 1 is transmitted to the rotor 21 via the pump impeller 16, whereby the oil pump 20 can be driven.

The forward/reverse switching mechanism 8 is provided in a power transmission path between the input shaft 11 and the belt-type continuously variable transmission 9. The forward/reverse switching mechanism 8 has a planetary gear mechanism 24 of a double-pinion type. The planetary gear mechanism 24 has a sun gear 25 that is provided at an end of the input shaft 11 on the side of the belt-type continuously variable transmission 9, a ring gear 26 that is arranged on an outer peripheral side of the sun gear 25 in such a manner as to be coaxial with the sun gear 25, a pinion gear 27 that is engaged with the sun gear 25, a pinion gear 28 that is engaged with the pinion gear 27 and the ring gear 26, and a carrier 29 that holds the pinion gears 27, 28 such that they can revolve on their own axes and that holds the pinion gears 27, 28 such that they can revolve around the sun gear 25 in an integral manner. The carrier 29 is connected to a primary shaft (which is to be described later) of the belt-type continuously variable transmission 9.

A forward clutch CR that connects and disconnects a power transmission path between the carrier 29 and the input shaft 11 is provided. The forward clutch CR can rotate around the input shaft 11 and has a known structure wherein annular plates and discs are arranged axially alternately. The plates and discs are made from a metallic material. Furthermore, a reverse brake BR that controls rotation and fixation of the ring gear 26 is provided on the side of the transaxle case 5. The reverse brake BR is provided on an outer peripheral side of the input shaft 11 and has a known structure wherein annular plates and discs are arranged axially alternately.

The belt-type continuously variable transmission 9 has a primary shaft (i.e., a driving-side shaft) 30 that is arranged concentric with the input shaft 11, and a secondary shaft (i.e., a countershaft or a driven-side shaft) 31 that is arranged parallel to the primary shaft 30. The primary shaft 30 and the secondary shaft 31 are made from a metallic material such as a steel alloy for mechanical structures. Bearings 32, 33 rotatably hold the primary shaft 30, and bearings 34, 35 rotatably hold the secondary shaft 31.

The primary shaft 30 is provided with a primary pulley 36, and the secondary shaft 31 is provided with a secondary pulley 37. The primary pulley 36 has a stationary sheave (i.e., a stationary member) 38 that is formed on the outer periphery of the primary shaft 30 in an integral manner and a movable sheave (i.e., a movable member) 39 that is designed to be displaceable in the direction of an axis of the primary shaft 30. A V-shaped groove 40 is formed between opposed faces of the stationary sheave 38 and the movable sheave 39.

A hydraulic actuator (i.e., a hydraulic servo mechanism) 41 that moves the movable sheave 39 toward and away from the stationary sheave 38 by operating the movable sheave 39 in the direction of the axis of the primary shaft 30 is provided. The hydraulic actuator 41 is provided with an oil passage (not shown), a hydraulic chamber (not shown), a piston (not shown) and so on. On the other hand, the secondary pulley 37 has a stationary sheave (i.e., a stationary member) 42 that is formed on an outer periphery of the secondary shaft 31 in an integral manner and a movable sheave (i.e., a movable member) 43 that is designed to be displaceable in the direction of an axis of the secondary shaft 31. A V-shaped groove 44 is formed between opposed faces of the stationary sheave 42 and the movable sheave 43. A hydraulic actuator (i.e., a hydraulic servo mechanism) 45 that moves the movable sheave 43 toward and away from the stationary sheave 42 by operating the movable sheave 43 in the direction of the axis of the secondary shaft 31 is provided. The hydraulic actuator 45 has a compression spring (not shown), an oil passage (not shown), a hydraulic chamber (not shown) and so on.

A belt 46 is wound and hung along the groove 40 in the thus-constructed primary pulley 36 and the groove 44 in the thus-constructed secondary pulley 37. The belt 46 has a multitude of metallic bridges and two steel rings. A cylindrical counter driven gear 47 is fixed to the secondary shaft 31 on the side of the engine 1, and is held by bearings 48, 49. Furthermore, the bearing 35 is provided on the side of the transaxle rear cover 6, and the secondary shaft 31 is provided with a parking gear 31A between the bearing 35 and the secondary pulley 37.

An intermediate shaft 50 that is parallel to the secondary shaft 31 is provided in a power transmission path between the final reduction gear 10 and the counter driven gear 47 of the belt-type continuously variable transmission 9. The intermediate shaft 50 is supported by bearings 51, 52. The intermediate shaft 50 is formed with a counter driven gear 53 and a final drive gear 54. The counter driven gear 47 is engaged with the counter driven gear 53.

On the other hand, the final reduction gear 10 has a differential case 55 with a hollow inner space. The differential case 55 is rotatably held by bearings 56, 57, and a ring gear 58 is provided on an outer periphery of the differential case 55. The final drive gear 54 is engaged with the ring gear 58. A pinion shaft 59 is fitted in the differential case 55, and two pinion gears 60 are fitted to the pinion shaft 59. Two side gears 61 are engaged with the pinion gears 60. Two front drive shafts 62 are connected to the side gears 61 respectively. A wheel (front wheel) 63 is connected to each of the front drive shafts 62.

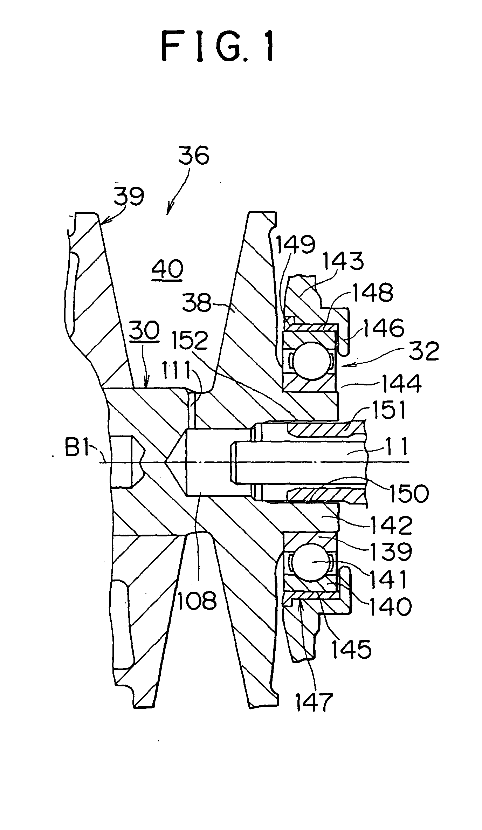

Fig. 1 is a front sectional view of a region close to the primary pulley 36. The primary pulley 36 is disposed on the outer periphery of the primary shaft 30 between the bearing 33 that is fitted to the transaxle rear cover 6 and the bearing 32 that is fitted to the side of the transaxle case 5. That is, the primary shaft 30 is supported at two positions along its axis. The primary pulley 36 is disposed between the two points. The bearing 32 is a known radial bearing that has an inner race 139, an outer race 140, and a roller 141. The bearing 33 is also a known radial bearing. A cylindrical portion 142 protruding toward the forward-and/reverse mechanism 8 is formed at an end that belongs to the primary shaft 30 and that is closer to the forward/reverse switching mechanism 8 than the stationary sheave 38.

On the other hand, a partition 143 is provided inside the transaxle case 5 between the belt-type continuously variable transmission 9 and the forward/reverse switching mechanism 8, and a through-hole 144 is formed in the partition 143. The through-hole 144 penetrates in the direction of the axis of the primary shaft 30. An annular recess 145 that has an axis B 1 as its center is formed around the through-hole 144. An inwardly directed flange 146 is formed at a back end that belongs to the annular recess 145 and that is on the side of the forward/reverse switching mechanism 8. The inwardly directed flange 146 defines the through-hole 144.

A cylindrical sleeve 147 is securely fitted to an inner periphery of the annular recess 145. The sleeve 147 has a cylindrical portion 148 and a flange 149 that integrally continues radially outwardly from the cylindrical portion 148 at an end that is opposite the inwardly directed flange 146. The sleeve 147 is made from a metallic material such as iron, steel and so on. The transaxle case 5 is formed from a metallic material that is lower in hardness than the sleeve 147, such as aluminum. The inner race 139 of the bearing 32 is securely fitted to an outer periphery of the cylindrical portion 142 of the primary shaft 30, and the outer race 140 of the bearing 32 is securely fitted to an inner periphery of the sleeve 147.

On the other hand, the primary shaft 30 can rotate around the axis B1, and an oil passage 108 that extends axially is formed inside the primary shaft 30. An inner tooth 150 is formed on an inner peripheral face that is provided on the side of the cylindrical portion 142 of the primary shaft 30 and that faces the oil passage 108. Furthermore, the carrier 29 of the planetary gear mechanism 24 has a cylindrical portion 151 whose longitudinal axis extends substantially coaxial with the axis of the primary shaft 30, and an outer tooth 152 is formed on an outer peripheral face of the cylindrical portion 151.

The inner tooth 150 and the outer tooth 152 are constructed such that the axis of the primary shaft 30 and the axis of the cylindrical portion 151 are allowed to intersect with each other within a predetermined angular range when the inner tooth 150 and the outer tooth 152 are fitted to each other. More specifically, a predetermined gap (i.e., looseness) is set between the inner tooth 150 and the outer tooth 152 in the direction of their tooth faces. A predetermined gap is also set between a tooth bottom face of the inner tooth 150 and a tooth top face of the outer tooth 152. In the case of such a construction, when the inner tooth 150 and the outer tooth 152 are fitted to each other, the axis of the primary shaft 30 and the axis of the cylindrical portion 151 are also allowed to move relatively to each other in a direction perpendicular to the axes. When the inner tooth 150 and the outer tooth 152 are fitted to each other, the fitting region and the bearing 32 are substantially located at the same axial position (more specifically, an area of a predetermined length).

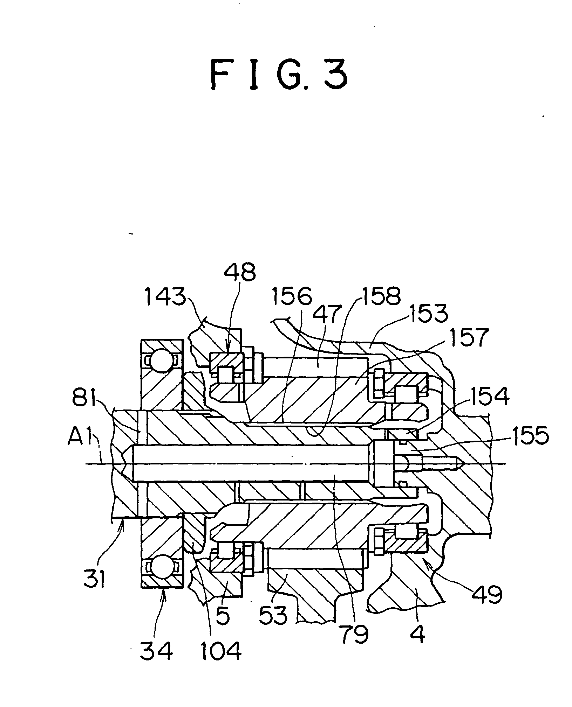

The secondary pulley 37 is disposed on the outer periphery of the secondary shaft 31 between the bearing 34 and the bearing 35. Fig. 3 is a front sectional view of a concrete construction of a region close to the secondary shaft 31. The secondary shaft 31 can rotate around an axis A1, and an oil passage 79 is formed inside the secondary shaft 31 in the axial direction. An oil passage 81 that is radially elongated from an outer peripheral face of the secondary shaft 31 and that is connected to the oil passage 79 is provided.

Furthermore, a nut 104 is securely fastened to the outer periphery of the secondary shaft 31. The bearing 34 is securely positioned by the nut 104 in the direction of the axis of the secondary shaft 31. On the other hand, a partition 153 on the side of the torque converter 7 is provided inside the transaxle housing 4. A bearing 48 is installed between the partition 143 and the transaxle housing 5, and a bearing 49 is installed between the partition 153 and the transaxle housing 4. A cylindrical portion 154 is provided at an end of the secondary shaft 31 that is on the side of the transaxle housing 4. The transaxle housing 4 is provided with a cylindrical protruding portion 155. The cylindrical portion 154 is rotatably fitted to an outer peripheral face of the protruding portion 155.

An outer tooth 156 is formed on the outer peripheral face of the secondary shaft 31 between the cylindrical portion 154 and the bearing 34. A cylindrical member 157 is fitted to an outer periphery of the outer tooth 156, and an inner tooth 158 is formed on an inner peripheral face of the cylindrical member 157. The counter driven gear 47 is formed on an outer peripheral face of the cylindrical member 157. The inner tooth 158 and the outer tooth 156 are constructed such that the axis of the secondary shaft 31 and the axis of the cylindrical member 157 are allowed to intersect with each other within a predetermined angular range when the inner tooth 158 and the outer tooth 156 are fitted to each other. More specifically, a predetermined gap (i.e., looseness) is set between the inner tooth 158 and the outer tooth 156 in the direction of their tooth faces. A predetermined gap is also set between a tooth bottom face of the inner tooth 158 and a tooth top face of the outer tooth 156. Furthermore, a predetermined gap is also set between a tooth top face of the inner tooth 158 and a tooth bottom face of the outer tooth 156. In the case of such a construction, when the inner tooth 158 and the outer tooth 156 are fitted to each other, the axis of the secondary shaft 31 and the axis of the cylindrical member 157 are also allowed to move relatively to each other in a direction perpendicular to the axes.

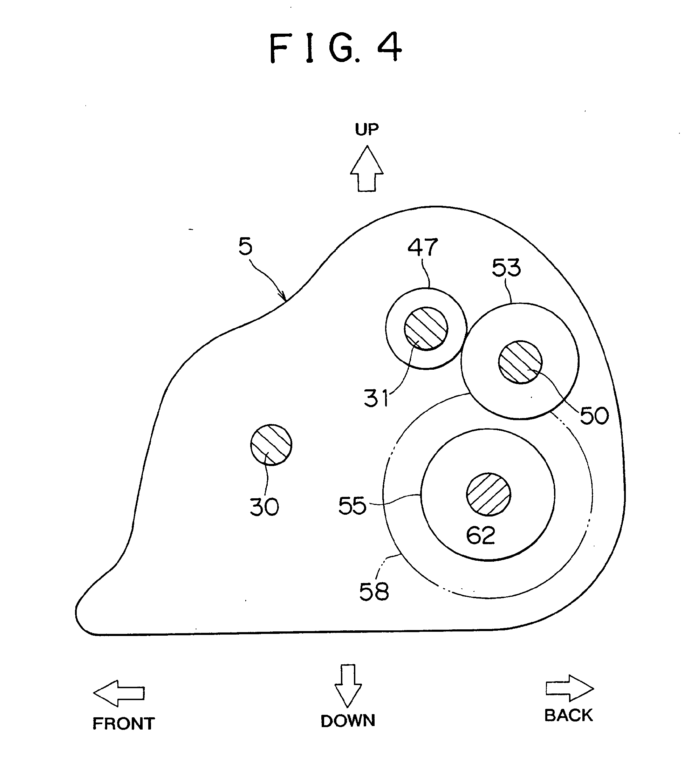

Fig. 4 is a side view of arrangement of various components inside the transaxle case 5. As shown in Fig. 4, the secondary shaft 31 is disposed above and behind the primary shaft 30. The intermediate shaft 50 is disposed above the primary shaft 30 and below the secondary shaft 31. The intermediate shaft 50 is disposed behind the secondary shaft 31. Furthermore, a drive shaft 62 is disposed between the secondary shaft 31 and the intermediate shaft 50 in a longitudinal direction of the vehicle body.

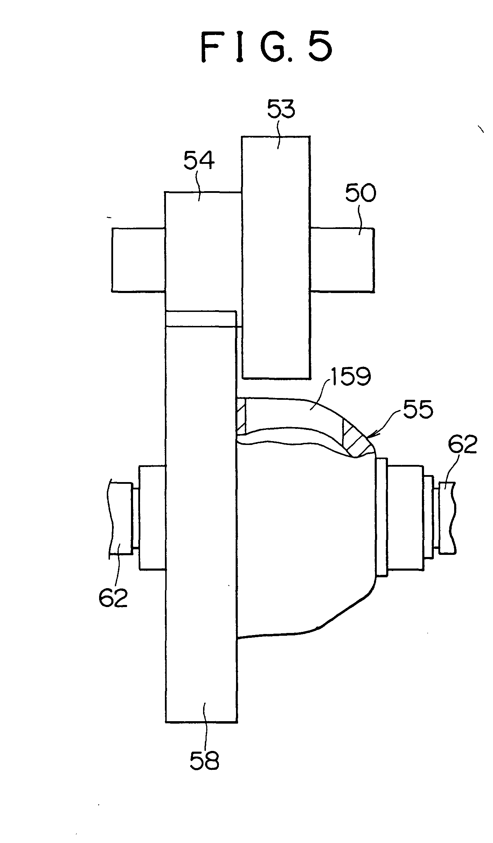

On the other hand, the counter driven gear 53 of the intermediate shaft 50 is provided in a region for arrangement of the differential case 55 of the final reduction gear 10 in the direction of an axis of the intermediate shaft 50. Fig. 5 is a conceptual view of the final reduction gear 10 and the counter driven gear 53 when viewed from a position behind the vehicle. An opening 159 is provided in the differential case 55 beside the ring gear 58. The opening 159 is designed to permit installation of components such as the pinion shaft 59, the pinion gears 60, the side gears 61 and so on in the differential case 55. The counter driven gear 53 and the opening 159 are disposed substantially in the same region in the direction of the axis of the intermediate shaft 50. The opening 159 is disposed below the counter driven gear 53 with respect to the vertical height of the vehicle body.

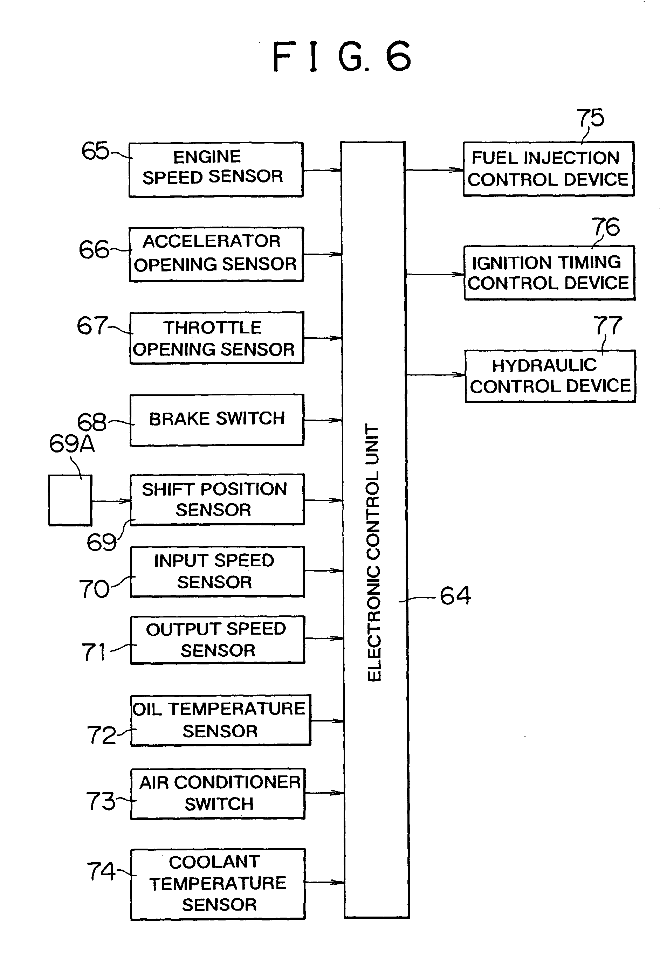

Fig. 6 is a block diagram of a control system of the vehicle shown in Fig. 2. An electronic control unit 64 for controlling the entire vehicle is constituted by a microcomputer that is mainly composed of a processing unit (CPU or MPU), a memory unit (RAM and ROM), and an I/O interface.

Signals from an engine speed sensor 65, an accelerator opening sensor 66, a throttle opening sensor 67, a brake switch 68, a shift position sensor 69 for detecting an operation state of a shift position selector 69A, an input speed sensor 70 for detecting an input speed of the belt-type continuously variable transmission 9, an output speed sensor 71 for detecting an output speed of the belt-type continuously variable transmission 9, an oil temperature sensor 72 for detecting a temperature of working fluid in the belt-type continuously variable transmission 9 and the torque converter 7, an air conditioner switch 73, a coolant temperature sensor 74 for detecting a temperature of coolant in the engine 1, and so on are inputted to the electronic control unit 64.

Based on a signal from the shift position sensor 69, it is determined whether a drive position (e.g., D (drive) position, R (reverse) position and so on) or a non-drive position (e.g., N (neutral) position, P (parking) position and so on) has been selected. In addition, if the drive position has been selected, it is determined whether a forward position (e.g., D position) or a reverse position (e.g., R position) has been selected. Based on signals from the engine speed sensor 65, the input speed sensor 70, the output speed sensor 71 and so on, it is possible to calculate a vehicle speed and a change gear ratio of the belt-type continuously variable transmission 9.

A signal for controlling a fuel injection control device 75 of the engine 1, a signal for controlling an ignition timing control device 76 of the engine 1, and a signal for controlling a hydraulic control device 77 are outputted from the electronic control unit 64. The hydraulic control device 77 has a solenoid valve (not shown) that controls engagement and release of the lock-up clutch 19, a solenoid valve (not shown) that controls hydraulic pressures in hydraulic chambers of the hydraulic actuators 41, 45, a solenoid valve (not shown) that controls hydraulic pressures applied to the forward clutch CR and the reverse brake BR, a hydraulic circuit, and so on.

Data for performing control of the engine 1 and the lock-up clutch 19 and gear change control of the belt-type continuously variable transmission 9 are stored in the electronic control unit 64. For example, data for selecting an optimal operation state of the engine 1 by controlling a gear change ratio of the belt-type continuously variable transmission 9 are stored in the electronic control unit 64. A lock-up clutch control map that uses vehicle speed and accelerator opening as parameters is stored in the electronic control unit 64. Based on the lock-up clutch control map, the lock-up clutch 19 is controlled and assumes an engaged state, a released state or a slipping state. Based on various signals inputted to the electronic control unit 64 and data stored in the electronic control unit 64, control signals are outputted from the electronic control unit 64 to the fuel injection control device 75, the ignition timing control device 76 and the hydraulic control device 77.

It will now be described how the construction of this embodiment corresponds to that of the invention. The primary shaft 30 and the secondary shaft 31 correspond to a rotating member of the invention. The primary shaft 30 corresponds to a driving-side rotating member of the invention, and the secondary shaft 31 corresponds to a driven-side rotating member of the invention. The primary pulley 36 and the secondary pulley 37 correspond to a power transmission member of the invention. A belt 46 corresponds to a wound-and-hung transmission member of the invention. The carrier 29, the cylindrical portion 151, the cylindrical member 157 and the counter driven gear 47 correspond to a connecting member of the invention.

Furthermore, the bearings 32, 33, 34 and 35 correspond to a supporting member of the invention. The power transmission path composed of the forward/reverse switching mechanism 8, the belt-type continuously variable transmission 9 and so on corresponds to a wound-and-hung transmission device of the invention. The inner tooth 150, the outer tooth 152, and the gap formed between the inner tooth 150 and the outer tooth 152 constitute an intersection allowing mechanism and a movement allowing mechanism of the invention. The outer tooth 156, the inner tooth 158, and the gap formed between the outer tooth 156 and the inner tooth 158 constitute an intersection allowing mechanism and a movement allowing mechanism of the invention.

The pinion gears 27, 28 and the counter driven gear 47 correspond to a gear of the invention. The reverse brake BR and the forward clutch CR correspond to a frictional engagement device of the invention. The engine 1 corresponds to a driving power source of the invention. The transaxle housing 4, the transaxle case 5, and the transaxle rear cover 6 correspond to a case of the invention. The sleeve 147 corresponds to a reinforcing member of the invention.

One example of control of a vehicle having the aforementioned construction will be described. First of all, the forward/reverse switching mechanism 8 is controlled based on operation of the shift position selector 69A. If the forward position has been selected, the forward clutch CR is engaged and the reverse brake BR is released so that the input shaft 11 and the primary shaft 30 are directly connected. In this state, if torque (i.e., power) of the engine 1 is transmitted to the input shaft 11 via the torque converter 7, the input shaft 11, the carrier 29 and the primary shaft 30 rotate integrally. Torque of the primary shaft 30 is transmitted to the secondary shaft 31 via the primary pulley 36, the belt 46 and the secondary pulley 37.

The torque that has been transmitted to the secondary shaft 31 is transmitted to the intermediate shaft 50 via the counter driven gear 47 and the counter driven gear 53. The torque that has been transmitted to the intermediate shaft 50 is transmitted to the differential case 55 via the final drive gear 54 and the ring gear 58. If the differential case 55 rotates, its torque is transmitted to the drive shaft 62 via the pinion gear 60 and the side gear 61 and then to the wheel 63.

On the other hand, if the reverse position has been selected, the forward clutch CR is released and the reverse brake BR is engaged so that the ring gear 34 is fixed. Then, as the input shaft 11 rotates, the pinion gears 27, 28 rotate around their own axes and around the input shaft 11, and the carrier 29 rotates reversely with respect to a rotational direction of the input shaft 11. As a result, rotating members such as the primary shaft 30, the secondary shaft 31, the intermediate shaft 50 and so on rotate reversely with respect to the case of the forward position, and the vehicle moves backwards.

Based on a demand for acceleration of the vehicle (i.e., a demand for a driving force) as determined from conditions such as vehicle speed and accelerator opening, data stored in the electronic control unit 64 (e.g., an optimal fuel consumption curve that uses engine speed and throttle opening as parameters), and so on, the gear change ratio of the belt-type continuously variable transmission 9 is controlled such that the engine 1 assumes an optimal operation state. More specifically, the width of the groove 40 in the primary pulley 36 is adjusted by controlling a hydraulic pressure in the hydraulic chamber of the hydraulic actuator 41. As a result, the diameter of the position of belt 46 on the primary pulley 36 changes, and the ratio between input and output speeds of the belt-type continuously variable transmission 9, namely, the gear change ratio of the belt-type continuously variable transmission 9 is controlled non-stepwise (continuously).

Furthermore, the width of the groove 44 in the secondary pulley 37 is changed by controlling a hydraulic pressure in the hydraulic chamber of the hydraulic actuator 45. That is, a clamping pressure force (i.e., a clamping force) that is applied axially to the belt 46 by the secondary pulley 37 is controlled. A tensile force of the belt 46 is controlled by the clamping pressure force, and a contact surface pressure among the primary pulley 36, the secondary pulley 37 and the belt 46 is controlled. A hydraulic pressure in the hydraulic chamber of the hydraulic actuator 45 is controlled based on a torque inputted to the belt-type continuously variable transmission 9, a gear change ratio of the belt-type continuously variable transmission 9, and so on. The torque inputted to the belt-type continuously variable transmission 9 is determined based on an engine speed, a throttle opening, a torque ratio of the torque converter 7, and so on.

If a tensile force is applied to the belt 46, the primary shaft 30 and the secondary shaft 31 may deflect. First of all, the side of the primary shaft 30 will be described. The primary shaft 30 is supported by the transaxle case 5 and the transaxle rear cover 6 via the bearings 32, 33, and the primary pulley 36 is disposed between the bearing 32 and the bearing 33. Therefore, if a tensile force is applied to the belt 46, the primary shaft 30 deflects with a journal supported by the bearings 32, 33 serving as a fulcrum.

If a reference position of the primary shaft 30 is assumed to be the axis B1 when deflection of the primary shaft 30 is equal to or smaller than a predetermined value, the axis of the primary shaft 30 that has deflected inclines with respect to the axis B1 at a predetermined angle (deflection angle). Then, a region that belongs to the axis of the primary shaft 30 and that is located closer to the forward/reverse switching mechanism 8 than the bearing 32 in the direction of the axis of the primary shaft 30 may incline with respect to the axis B 1 at a predetermined angle. However, in this embodiment, the cylindrical portion 151 of the carrier 29 connected to the primary shaft 30 at a position that is closer to the forward/reverse switching mechanism 8 than the bearing 32 and the cylindrical portion 142 of the primary shaft 30 are connected such that the axis of the primary shaft 30 and the axis of the carrier 29, which are normally coaxial, are allowed to intersect with each other. In other words, the cylindrical portion 151 of the carrier 29 and the cylindrical portion 142 of the primary shaft 30 are allowed to move relatively to each other in a direction perpendicular to these axes.

Therefore, the axis of the carrier 29 is not obligated to follow the deflections of the axis of the primary shaft 30, and so even if a deflection angle has been generated in the primary shaft 30, a deflection angle (angle of inclination) of the axis of the carrier 29 relative to the axis B 1 can be kept within a small value. Accordingly, a state of engagement of the pinion gears 27, 28 held by the carrier 29 with the sun gear 25 and the ring gear 26 (more specifically, a state of contact of teeth) is maintained normal, whereby gear noise, abnormal abrasion, power loss and so on can be restrained. Furthermore, when the forward clutch CR is engaged, the annular plates and the annular discs come into contact with one another uniformly in the circumferential direction, and their local abrasion and so on can be restrained. Furthermore, in a state where the forward clutch CR is released, the plates and the discs can be reliably prevented from coming into contact with one another. Furthermore, when the reverse brake BR is engaged, the annular plates and the annular discs come into contact with one another uniformly in the circumferential direction, and their local abrasion and so on can be restrained. Furthermore, in a state where the reverse brake BR is released, the plates and the discs can be reliably prevented from coming into contact with one another.

In this embodiment, the bearing 32 and the region where the outer tooth 152 and the inner tooth 150 are fitted to each other are disposed substantially at the same position in the direction of the axis of the primary shaft 30. Therefore, if the primary shaft 30 deflects with the region supported by the bearings 32, 33 serving as a fulcrum, the region that belongs to the primary shaft 30 and that is supported by the bearings 32, 33 is inhibited from being displaced in a direction perpendicular to the axis B 1. In the region that is inhibited from being displaced in the direction perpendicular to the axis B1, the outer tooth 152 and the inner tooth 150, which allow the primary shaft 30 and the cylindrical portion 151 of the carrier 29 to intersect with each other (i.e., which allow the primary shaft 30 and the cylindrical portion 151 of the carrier 29 to move relatively to each other in the direction perpendicular to the axes), are provided. Therefore, even if the primary shaft 30 has deflected, this deflection is hardly conveyed to the side of the carrier 29 and the axis of the carrier 29 is not inclined. Thus, functions of reducing gear noise, abnormal abrasion, power loss and so on are further improved.

In the embodiment shown in Fig. 1, the primary shaft 30 is supported by the bearing 32, and the cylindrical portion 151 of the carrier 29 is fitted to the inner periphery of the primary shaft 30, and the inner peripheral face of the primary shaft 30 and the outer peripheral face of the cylindrical portion 151 are provided with the intersection allowing mechanism (i.e., the movement allowing mechanism). However, it is also possible to adopt a construction for fitting the primary shaft 30 to the inner periphery of the carrier 29 and provide the inner peripheral face of the carrier 29 and the outer peripheral face of the primary shaft 30 with the intersection allowing mechanism (i.e., the movement allowing mechanism) as described above.

In this embodiment, the sleeve 147 is interposed between the bearing 32 and the partition 143. Therefore, when the primary shaft 30 deflects as described above, a radial load that is transmitted from the primary shaft 30 to the bearing 32 is received by the sleeve 147. Thus, deformation of the partition 143 can be restrained.

On the other hand, in a process of manufacturing a vehicle, the sleeve 147 is fitted to the partition 143. More specifically, the sleeve 147 is inserted into the annular recess 145 and press-fitted toward the inwardly directed flange 146. An assembled body of the belt-type continuously variable transmission 9 with the bearing 32 fitted to the cylindrical portion 142 of the primary shaft 30 is inserted into the transaxle case 5, and the outer race 140 of the bearing 32 is securely fitted to the inner periphery of the sleeve 147. In this embodiment, the sleeve 147 is formed with the flange 149. In other words, since the flange 149 is formed at a rear end of the sleeve 147 with respect to its press-fitting direction, an area for transmission of a press-fitting load can be enlarged greatly. Thus, the efficiency in press-fitting the sleeve 147 into the annular recess 145 is improved.

The side of the secondary shaft 31 will be described. The secondary shaft 31 is supported by the transaxle case 5 and the transaxle rear cover 6 via the bearings 34, 35, and the secondary pulley 37 is disposed in the secondary shaft 31 between the bearing 34 and the bearing 35. The secondary shaft 31 is provided with the secondary pulley 37 and the counter driven gear 47 on opposed sides in the direction of the axis of the secondary shaft 31, with the bearing 34 located between the secondary pulley 37 and the counter driven gear 47.

Therefore, if a tensile force is applied to the belt 46, the secondary shaft 31 deflects with a journal supported by the bearings 34, 35 serving as a fulcrum. If a reference position of the secondary shaft 31 is assumed to be the axis A1 when deflection of the secondary shaft 31 is equal to or smaller than a predetermined value, the axis of the secondary shaft 31 that has deflected inclines with respect to the axis A1 at a predetermined angle (deflection angle). Then, a region that belongs to the axis of the secondary shaft 31 and that is located closer to the protruding portion 155 than the bearing 34 in the direction of the axis of the secondary shaft 31 may incline with respect to the axis A1 at a predetermined angle. However, in this embodiment, the outer tooth 156 of the secondary shaft 31 and the inner tooth 158 of the cylindrical member 157 are connected such that the axis of the secondary shaft 31 and the axis of the cylindrical member 157 are allowed to intersect with each other. In other words, the outer tooth 156 of the secondary shaft 31 and the inner tooth 158 of the cylindrical member 157 are connected so as to be allowed to move relatively to each other in a direction perpendicular to the axes.

Therefore, even if the secondary shaft 31 has deflected, an increase in deflection angle (angle of inclination) defined by the axis of the cylindrical member 157 and the axis A1 is reduced. Further, the cylindrical member 157 is supported by the bearings 48, 49 on opposed sides in the axial direction. This also serves to reduce an increase in the deflection angle. Accordingly, a state of engagement of the counter driven gear 47 with the counter driven gear 53 (more specifically, a state of contact of teeth) is maintained normal, whereby gear noise, abnormal abrasion, power loss and so on can be restrained.

Likewise, in the embodiment shown in Fig. 3, at least one of the bearings 48, 49 and the region where the outer tooth 156 and the inner tooth 158 are fitted to each other can be provided at the same position in the direction of the axis of the secondary shaft 31. In such a construction, the secondary shaft 31 deflects with the bearings 48, 49 serving as a fulcrum. Therefore, in the region supported by the bearings 48, 49, displacement of the secondary shaft 31 in the direction perpendicular to the axis A1 is reduced. In the region where displacement in the direction perpendicular to the axis A1 is reduced, the secondary shaft 31 and the counter driven gear 47 are connected. Thus, even if the secondary shaft 31 has deflected, this deflection is hardly conveyed to the counter driven gear 47. Thus, functions of reducing gear noise, abnormal abrasion, power loss and so on are further improved.

Criteria for setting the gap between the inner tooth 150 and the outer tooth 152 and the gap formed between the inner tooth 158 and the outer tooth 156 include a tensile force applied to the belt 46, an axial distance between two of the bearings, an axial distance between a fitting region and one of the bearings that is disposed closest to the fitting region, materials for the primary shaft 30 and the secondary shaft 31, an outer diameter, a bending rigidity (or bending strength), and so on. As a matter of course, the above-described gaps are set to such an extent that transmission of power (i.e., torque) between the carrier 29 and the primary shaft 30 and between the secondary shaft 31 and the cylindrical member 157 is not hindered.

In this embodiment, oil for lubrication and cooling is supplied to various regions inside the transaxle housing 4, the transaxle case 5 and the transaxle rear cover 6 via the oil passage and the hydraulic circuit of the hydraulic control device 77. This oil is also supplied to the counter driven gear 53 of the intermediate shaft 50. In this embodiment, the counter driven gear 53 and the opening 159 of the differential case 55 are disposed in the same region in the direction of the axis of the intermediate shaft 50, and the differential case 55 is disposed below the counter driven gear 53.

Therefore, if the opening 159 has moved to a position below the counter driven gear 53 as a result of rotation of the differential case 55, oil adhered to the counter driven gear 53 drains through the opening 159, and is supplied to the differential case 55. Accordingly, exothermic and abraded regions inside the differential case 55 can be cooled and lubricated, and the performance of lubrication in the differential case 55 is improved.

This embodiment is also applicable to a vehicle that employs a driving power source other than an engine, for example an electric motor. This embodiment is also applicable to a vehicle that employs an engine and an electric motor as driving power sources. Furthermore, this embodiment is also applicable to a power distribution device (i.e., a center differential) for front and rear wheels in a four-wheel-drive vehicle. That is, this power distribution device has two sprockets and a chain that is wound and hung around the sprockets, for the purpose of distributing power from a driving power source to the front and rear wheels. The power distribution device has a rotating member fitted with a sprocket and a connecting member fitted to the rotating member in a power transmissible manner, and the rotating member is supported by a bearing. An intersection allowing mechanism that allows an axis of the rotating member and an axis of the connecting member to intersect with each other can be provided in a region where the rotating member and the connecting member are connected. The constructions as described in the respective embodiments can also be at least partially combined with one another.

In a belt-type continuously variable transmission having a primary pulley (36) provided on a primary shaft (30), a belt wound and hung around the primary pulley (36), a carrier fitted to the primary pulley (36) in a power transmissible manner, and a bearing supporting the primary pulley (36), a gap allowing the primary shaft (30) and the carrier to intersect with each other is provided between outer and inner teeth for fitting the primary shaft (30) and the carrier to each other.

## Claims

1. A wound-and-hung transmission device having a power transmission member (36, 37) provided in a rotating member (30, 31), a wound-and-hung transmission member (46) wound and hung around the power transmission member (36, 37), a connecting member (29, 151, 157, 47) connected to the rotating member (30, 31) in a power transmissible manner, and a supporting member (32, 33, 34, 35) supporting the rotating member (30, 31), the device **characterized by** comprising:
an intersection allowing mechanism (150, 152, 156, 158) that allows an axis of the rotating member (30, 31) and an axis of the connecting member (29, 151, 157, 47) to intersect with each other in a connecting region between the rotating member (30, 31) and the connecting member (29, 151, 157, 47).

2. A wound-and-hung transmission device comprising:
a power transmission member (36, 37) provided in a rotating member (30, 31);
a wound-and-hung transmission member (46) wound and hung around the power transmission member (36, 37);
a connecting member (29, 151, 157, 47) connected to the rotating member (30, 31) in a power transmissible manner;
a supporting member (32, 33, 34, 35) supporting the rotating member (30, 31); and
a movement allowing mechanism (150, 152, 156, 158) that allows an axis of the rotating member (30, 31) and an axis of the connecting member (29, 151, 157, 47) to move relatively to each other in a direction perpendicular to the axes in a connecting region between the rotating member (30, 31) and the connecting member (29, 151, 157, 47).

3. The wound-and-hung transmission device according to claim 1 or 2, **characterized in that**:
the power transmission member (36, 37) includes a pulley or a sprocket; and
the wound-and-hung transmission member (46) includes a belt or a chain.

4. The wound-and-hung transmission device according to claim 1 or 2, **characterized in that** one of the rotating member (30, 31) and the connecting member (29, 151, 157, 47) is fitted into a recess provided in a direction of an axis of the other of the rotating member (30, 31) and the connecting member (29, 151, 157, 47).

5. The wound-and-hung transmission device according to claim 4, **characterized in that** the intersection allowing mechanism (150, 152, 156, 158) is provided between one of the rotating member (30, 31) and the connecting member (29, 151, 157, 47) and the recess.

6. A belt-type continuously variable transmission comprising:
a power transmission member (36, 37) provided in a rotating member (30, 31);
a belt (46) wound and hung around the power transmission member (36, 37);
a connecting member (29, 151, 157, 47) connected to the rotating member (30, 31) in a power transmissible manner;
a supporting member (32, 33, 34, 35) supporting the rotating member (30, 31); and
an intersection allowing mechanism (150, 152, 156, 158) that allows an axis of the rotating member (30, 31) and an axis of the connecting member (29, 151, 157, 47) to intersect with each other in a connecting region between the rotating member (30, 31) and the connecting member (29, 151, 157, 47).

7. The belt-type continuously variable transmission according to claim 6, **characterized in that** the connecting region, the supporting member (32, 33, 34, 35) and the intersection allowing mechanism (150, 152, 156, 158) are disposed at the same position in the direction of the axis of the rotating member (30, 31).

8. The belt-type continuously variable transmission according to claim 6, **characterized in that** the connecting member (29, 151, 157, 47) is formed with a gear.

9. The belt-type continuously variable transmission according to claim 6, **characterized in that** a frictional engagement device that is engaged and released to control a power transmission state is connected to the connecting member (29, 151, 157, 47).

10. The belt-type continuously variable transmission according to claim 8 or 9, **characterized in that**:
the rotating member (30, 31) includes a driving-side rotating member and a driven-side rotating member;
the power transmission member (36, 37) includes a driving-side pulley provided in the driving-side rotating member and a driven-side pulley provided in the driven-side rotating member;
power from a driving power source is inputted to the belt (46) via the driving-side rotating member and is then transmitted to the driven-side rotating member; and
the intersection allowing mechanism (150, 152, 156, 158) is provided in at least one of the driving-side rotating member and the driven-side rotating member and in the connecting region between the rotating member and the connecting member (29, 151, 157, 47).

11. The belt-type continuously variable transmission according to claim 6, **characterized in that**:
a cylindrical reinforcing member is provided between the supporting member (32, 33, 34, 35) and a case fitted with the supporting member; and
the reinforcing member is formed with a radially elongated flange.

12. The belt-type continuously variable transmission according to claim 11,
**characterized in that**:
the case and the reinforcing member are formed from a metallic material; and
the reinforcing member is harder than the case.

13. The belt-type continuously variable transmission according to claim 6, **characterized in that** one of the rotating member (30, 31) and the connecting member (29, 151, 157, 47) is fitted into a recess provided in a direction of an axis of the other of the rotating member and the connecting member.

14. The belt-type continuously variable transmission according to claim 13, **characterized in that** the intersection allowing mechanism (150, 152, 156, 158) is provided between one of the rotating member (30, 31) and the connecting member (29, 151, 157, 47) and the recess.
